# EUROPEAN PATENT APPLICATION

(11) **EP 4 714 239 A1**
(43) Date of publication of application: **25.03.2026**
(21) Application number: 25199857.1
(22) Date of filing: 03.09.2025
(51) Int. Cl.: A01B 59/00, A01B 59/041, A01B 59/06

(54) **ADJUSTABLE END STOP**

(30) Priority: 18.09.2024 GB 202413761
(71) Applicant: AGCO International GmbH, 8212 Neuhausen am Rheinfall (CH)
(72) Inventor: Martin, Johannes, 87616 Marktoberdorf (DE); Reitemann, Gabriel, 87616 Marktoberdorf (DE); Meierhöfer, Jürgen, 87616 Marktoberdorf (DE); Shaw, Matthew Benjamin, Jackson (US)
(74) Representative: AGCO Intellectual Property Department

(57) **Abstract**

An adjustable end stop (205) comprises a body (301, 406) having a cavity (401) fluidly connected to a port (303) fitted with a grease nipple (303a). A piston (403) has a first end (404) slidably mounted in the cavity (401) and moveable between a retracted position and an extended position. Filling the cavity (401) with a flowable filling material such as grease via the grease nipple (303a) causes the piston (403) to move towards the extended position to adjust the overall height of the end stop. The end stop (205) is suitable for use in limiting sway of a draft link of a three-point hitch.

## Description

### CROSS-REFERENCE TO RELATED APPLICATIONS

This application claims the benefit of the filing date of U.K. Patent Application 2413761.4, "Adjustable End Stop," filed September 18, 2024, the entire disclosure of which is incorporated herein by reference.

### FIELD

Embodiments of the present disclosure relate generally to an adjustable end stop for a draft link assembly.

### BACKGROUND

A three-point hitch, also known as a three-point linkage, is an arrangement that allows an implement to be attached to the rear of a tractor. A conventional three-point hitch comprises a pair of lower linkages (also termed draft links) and a central upper linkage. Attachment of the three linkages to an implement secures the implement to the tractor and allows the implement to be raised and lowered through actuation, for example by raising and lowering the draft links.

In use, some lateral movement of the linkages of a three-point linkage is permitted within certain defined limits. The draft links can generally be allowed to sway laterally to a limited extent. This is often required when using ground engaging implements, such as a plough. Generally, a plough should follow a straight path of the tractor to provide good quality parallel ploughing. However, the plough may run into an obstacle, such as a stone, which may result in vertical movement and/or lateral movement. If the draft links are not allowed to sway, the plough may be damaged. Nevertheless, sway should be limited to avoid damage to the tractor and to avoid excessively non-parallel or curvy ploughing. To control the amount of sway, an end stop may be provided on either the linkages or on an adjacent fixed part of the tractor between the draft links. Such end stops also prevent wear of the draft links by preventing the main metallic components from coming into direct contact as the linkage moves laterally or vertically during use. Similar issues arise with other ground engaging implements. The amount of lateral movement or sway of the lower links that is acceptable may be different for different implements and/or tasks being undertaken. For this reason, it is advantageous if the end stops are adjustable.

European Patent Publication 1116431 A1, "Tractor Hitch with Sway Bumper," published July 18, 2001, discloses a tractor hitch with a tapered sway bumper attached with a mounting bolt to each of a pair of draft links of a three-point hitch, in which a spacing between each bumper and a sway block is adjustable by sliding the bumper along a lengthwise-extending T-shaped slot.

US Patent Publication 2024/0057494 A1, "Wear Block Assembly for a Three-point Hitch," published February 22, 2024, discloses a wear block assembly, in which a wedge block is provided on each draft link of a three-point hitch. Each wedge block is adjustable by loosening screws attaching the wedge block to the draft link, repositioning the wedge block to an adjusted position and then tightening the screws in the adjusted position.

A problem with existing arrangements is that the adjustment process for an end stop requires access to fixing screws and carrying out several operations to perform a simple adjustment. Such adjustments also need to be carried out on components that may not be easily accessible.

### BRIEF SUMMARY

In an aspect of the invention there is provided an adjustable end stop comprising: a body defining a cavity fluidly connected to a port fitted with a grease nipple; a piston having a first end slidably mounted in the cavity and moveable between a retracted position and an extended position; wherein filling the cavity with a flowable filling material via the grease nipple causes the piston to move towards the extended position.

The adjustable end stop can be adjusted by introducing a flowable material such as grease into the cavity through the grease nipple using a grease gun.

In embodiments, the adjustable end stop may have an abutment movable relative to the body between a first position in which a height of the end stop is at a minimum and a second position in which a height of the end stop is at a maximum; and wherein movement of the piston towards the extended position may cause the abutment to move towards the second position.

The abutment may be provided on a cap extending about a second end of the piston and slidably mounted to the body for movement between the first and second positions. The arrangement may be configured such that, in use, lateral forces applied to the cap are transferred directly from the cap to the body.

The arrangement may be configured such that an inner surface of the cap is engageable by the second end of the piston.

The body may comprise a base portion and a hollow insert having a lower end attached to the base portion to define the cavity. The hollow insert may be attached to the base portion with a screw connection between an outer surface of the insert and an inner wall of a recess in the base portion. The insert may have an inward flange at an upper end of the insert, the piston comprising a corresponding reduced-diameter portion at an upper end that is slidable within the inwards flange of the insert.

In embodiments, the adjustable end stop may comprise a fluid passageway connecting the cavity to the port through the base portion.

A side wall of the cap may comprise a slot, the end stop having a retaining pin extending from the insert through the slot to limit movement of the cap. The retaining pin may be a first retaining pin and the slot may be a first slot, the side wall of the cap may comprise a second slot and the end stop may comprise a second retaining pin extending from the insert through the second slot.

The adjustable end stop may comprise an insert sealing O-ring arranged to provide a fluid seal between the insert and the base portion.

In embodiments, the adjustable end stop may comprise a piston sealing O-ring arranged to provide a fluid seal between the piston and a side wall of the cavity.

In embodiments, a guide ring may be provided between the piston and a side wall of the cavity.

The port may be a filling port, and the base portion may have an exit port fluidly connected to the cavity. The exit port has a) a closure that is removable to allow flowable material to be removed from the cavity; or b) a one-way valve that is selectively openable to allow flowable material to be removed from the cavity.

In an aspect of the invention, there may be provided a draft link assembly for a three-point hitch which may comprise a pair of draft links and a pair of end stops as described above, each end stop being configured to limit sideways movement of a respective one of the draft links. Each end stop may be attached to a respective draft link.

In a further aspect of the invention, there may be provided a tractor which may include a three-point hitch having a draft link assembly as described above.

A method of adjusting the height of an adjustable end stop may comprise introducing a flowable material into the cavity using a grease gun connected to the grease nipple, causing the piston to move towards the extended position and increasing the height of the end stop.

In a further aspect of the invention, there may be provided an adjustable end stop which comprises a body defining a cavity fluidly connected to a port and a piston having a first end slidably mounted in the cavity and moveable between a retracted position and an extended position. Filling the cavity with a flowable filling material via the port causes the piston to move towards the extended position. The adjustable end stop may further comprise a cap movable relative to the body between a first position in which a height of the end stop is at a minimum and a second position in which a height of the end stop is at a maximum. Movement of the piston towards its extended position may cause the cap to move towards its second position. The cap may extend about a second end of the piston and slidably mounted to the body for movement between the first and second positions. The arrangement may be configured such that, in use, lateral forces applied to the cap are transferred directly from the cap to the body.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified side elevation of a tractor having a three-point hitch;
FIG. 2 is a drawing of a pair of draft links and lift bars for a three-point hitch;
FIGs. 3a-3c are drawings showing a perspective, side and top view respectively of an example adjustable end stop for a draft link;
FIGs. 4a and 4b are cross-sectional drawings of the end stop of FIGs. 3a-3c in an extended and retracted position respectively;
FIGs. 5a and 5b are further cross-sectional drawings of the end stop of FIGs. 3a-3c in an extended and retracted position respectively;
FIG. 6 is a drawing illustrating an exploded view of the end stop of FIGs. 3a-3c;
FIG. 7 is a cross-sectional drawing illustrating an exploded view of the end stop of FIGs. 3a-3c; and
FIG. 8 is a further cross-sectional drawing of the end stop of FIGs. 3a-3c.

### DETAILED DESCRIPTION

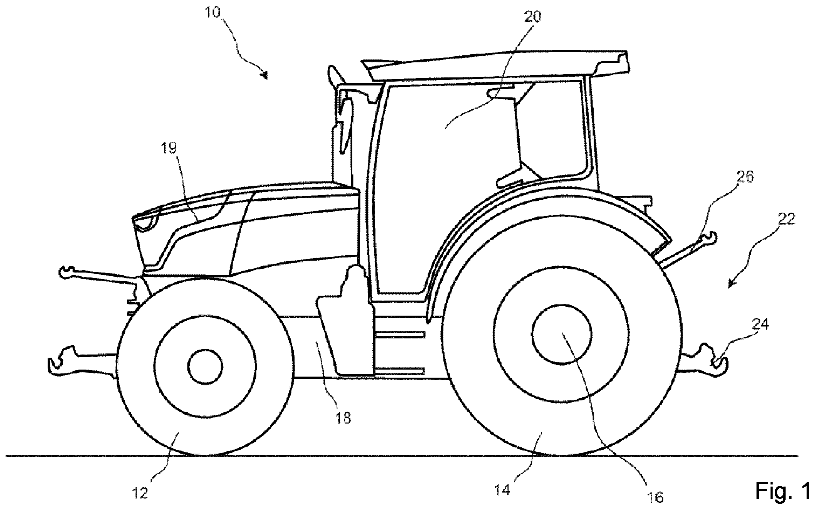

FIG. 1 schematically illustrates a vehicle in the form of a tractor 10 (agricultural or industrial) having front wheels 12 mounted to a front axle and rear wheels 14 mounted to a rear transaxle 16. The tractor 10 has a chassis 18 on which the transaxle 16 is mounted. In other arrangements, the transaxle 16 may form a part of the chassis 18. An engine compartment 19 houses an engine or other prime mover such as an electric motor or a hybrid power unit. An operator cabin 20 is supported on the chassis 18 and provides an enclosed space for an operator of the tractor 10.

The tractor 10 has a rear three-point hitch 22 for attaching an implement. In the case of an agricultural tractor, the implement may be an agricultural implement such as a plough, planter or sprayer, for example. The three-point hitch 22 is mounted on the rear of the tractor chassis 18 in the vicinity of a housing of the rear transaxle 16. The three-point hitch 22 includes a pair of lower draft links 24 (only one of which is visible in FIG. 1) and an upper link 26.

Each draft link 24 comprises an elongate body with a coupling at either end, one of which may be a hook as in this example. Inner couplings of each draft link 24 are pivotably connected to a structural part of the tractor, such as the transaxle/chassis, for rotation about an axis extending generally laterally of the vehicle, such that each draft link 24 is able to pivot about the lateral axis in a plane generally orthogonal to the axis of the rear axle 16 to raise and lower the outer couplings and thereby the implement attached to the hitch 22. For example, the inner couplings of the draft links may engage with a transverse bar attached to the chassis 18 and extending parallel to the axis of rotation of the rear axle 16.

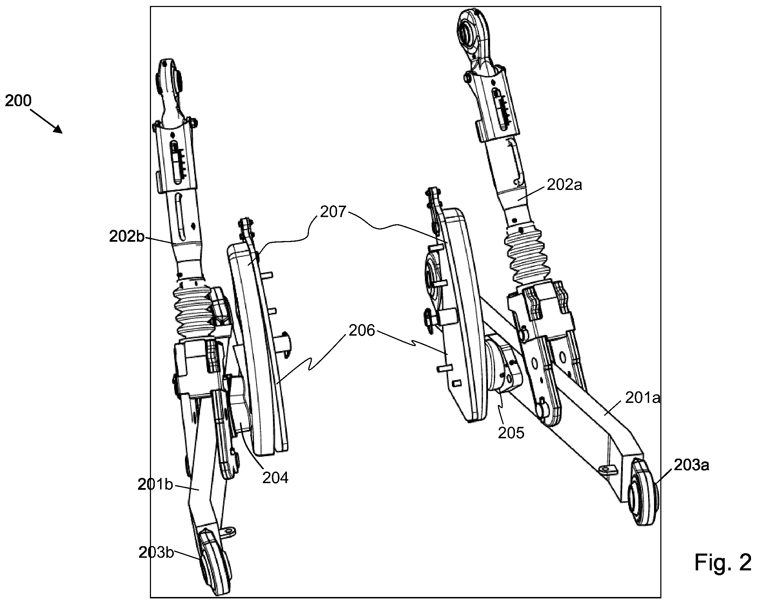

FIG. 2 illustrates an example draft link assembly 200 comprising a pair of draft links 201a, 201b attached to a corresponding pair of lift rods 202a, 202b. As described above in relation to FIG. 1, each draft link 201a, 201b comprises a coupling 203a, 203b at an outer end for coupling to an implement. In this example, the couplings 203a, 203b are in the form of spherical bearings with a central passage for attaching to an implement using a mounting pin, but other coupling arrangements such as a hook may be used. An upper coupling arm will also be present in a three-point hitch comprising the draft link assembly 200, which is not shown in FIG. 2.

Each of the lift rods 202a, 202b may be attached at an upper end to an actuator mechanism, typically including one or more hydraulic actuators, to allow the draft links 201a, 201b to be actuated up and down. The upper link may be adjustable in length. An example arrangement of actuators for a three-point hitch is described in European Patent Publication 4349146 A1, "Mobile Machine with Three-point Hitch," published April 20, 2024.

As an illustrative comparison, draft link 201b is shown in FIG. 2 with a current type of end stop 204, which may for example be in the form as described above in EP 1116431 A1 or US 2024/0057494 A1, referenced above, while draft link 201a is shown in FIG. 2 with an adjustable end stop 205. The end stops 204, 205 are attached to the respective draft arm 201b, 201a. The central body portion 206 may, as mentioned above, comprise a rear transaxle housing. A sway or guide block 207 may be mounted to either side of the central portion 206 for engagement with a respective one of the end stops 204, 205. In alternative arrangements, the end stops 204, 205 may be mounted to the central portion 206 in place of the sway blocks 207 which are mounted to the draft links 201a, 201b.

Each end stop 204, 205 limits inwards sideways (or swaying) movement of the respective draft link 203b, 203a, preventing the draft links 203b, 203a from making direct contact with the central body portion 206. Each end stop 204, 205 is also adjustable in that the sideways limit can be adjusted by adjusting a height of the end stop 204, 205. How the end stop 205 of the present disclosure is adjusted is explained in detail below. In practice, end stops 204, 205 of the same type would usually be used on both sides and in accordance with the present disclosure would be of the type 205 shown on the right hand side as viewed and as described in more detail below.

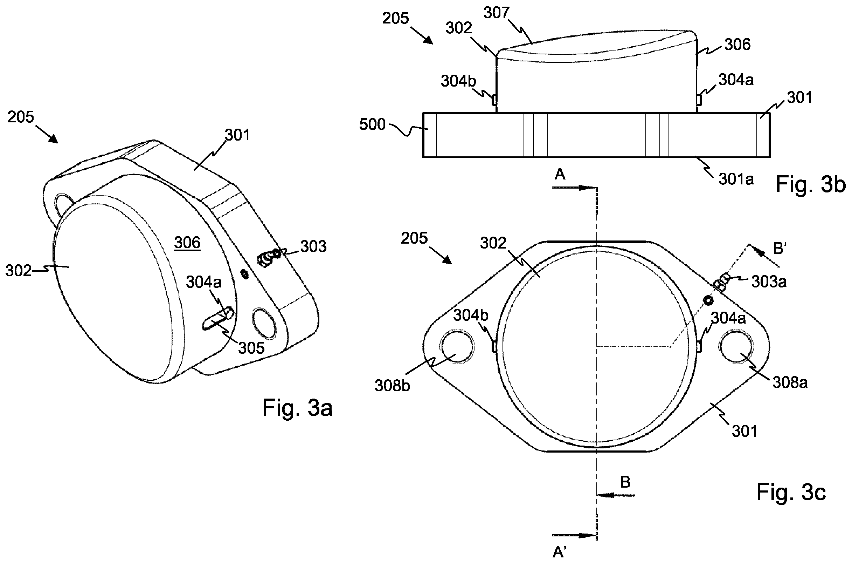

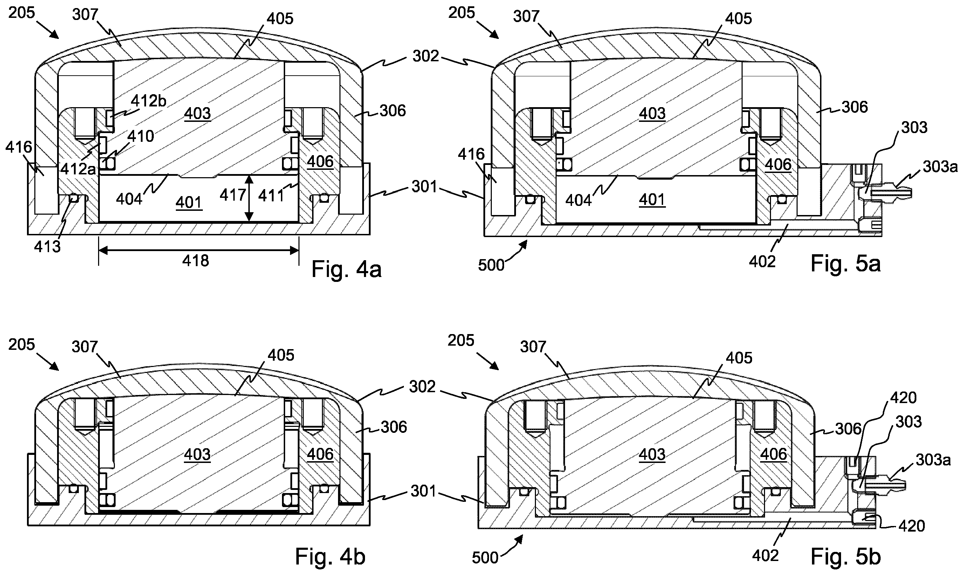

FIG. 3a illustrates in perspective an example adjustable end stop 205 of the type shown in FIG. 2. FIG. 3b illustrates a side elevation view of the end stop 205 and FIG. 3c a top plan view. The sections A-A' and B-B' through the end stop 205 illustrated in FIG. 3c are shown in FIGs. 4a, 4b and 5a, 5b respectively.

As shown in FIGs. 3a-3c, the adjustable end stop 205 comprises a base portion 301 and a cap 302, with a height of the cap 302 relative to the base portion 301 being adjustable.

The cap 302 is shown in FIGs. 3a-3c in its extended position, i.e., with the height of the cap 302 at its maximum, indicated by pins 304a, 304b extending through corresponding slots 305 in a side wall 306 of the cap 302 being at an upper limit. An abutment 307 in the form of an upper or top face of the cap 302 has a profile that varies across a width of the end stop 205 and which is configured to correspond with a profile of the sway or guide block 207 for optimal contact between them. The top face forms an abutment 307, the position of which relative to the base portion is adjustable between a first position, corresponding to the retracted position of the cap, wherein the overall height of the end stop 205 is at a minimum, and a second position, corresponding to the extended position of the cap 302, in which the overall height of the end stop 205 is at a maximum. The overall height of the end stop, which can also be considered the depth of the end stop, can be measured for example between a position on the outer surface of the abutment 307 and a datum position on the base portion. A suitable datum position may be the lower or bottom surface 301a of the base portion 301.

The end stop 205 may be attached to a component such as a draft link by way of a pair of mounting holes 308a, 308b in the base portion 301, which allow the end stop 205 to be mounted using bolts passing through the mounting holes 308a, 308b.

FIGs. 4a and 5a show a cross-section of the end stop 205 corresponding to the extended position of the cap 302 in FIG. 3a, i.e. with the cap 302 at its maximum extended position in which the height of the end stop is at a maximum. FIGs. 4b and 5b show a cross-section of the end stop 205 with the cap 302 at its retracted position, in which the height of the end stop is at a minimum.

The base portion 301 of the end stop 205 partly defines a cavity 401 that can be filled with grease via port 303 fitted with a grease nipple 303a. A fluid passageway 402 connects the cavity 401 to the filling port 303 through the base portion 301.

The end stop 205 comprises a piston 403 having a first end 404 that is slidably mounted within the cavity 401, allowing the piston 403 to be moveable between a retracted position (FIGs. 4b and 5b) and an extended position (FIGs. 4a and 5a). The cap 302 is mounted about a second opposing end 405 of the piston 403. The cap 302 and piston 403 are in this example separate components, with the abutment 307 in the form of the top face of the cap 302 adjacent the second end 405 of the piston 403. The piston 403 may be metallic, for example steel or aluminium, and the cap 302 may also be made of a metallic material, such as steel. However, the cap could be composed of a polymeric material such as high-density polyethylene or polypropylene. Suitable polymeric materials include Acrylonitrile Butadiene Styrene (ABS) and polyamide (PA) which could be reinforced with glass fibres. The cap 302 can be easily replaced if it wears during use.

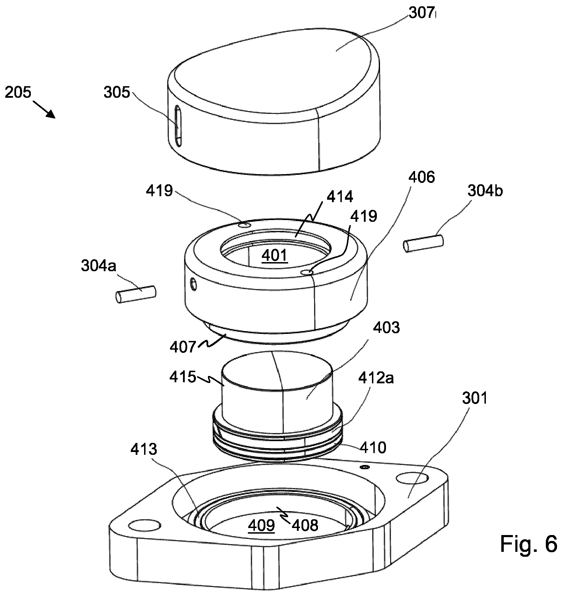

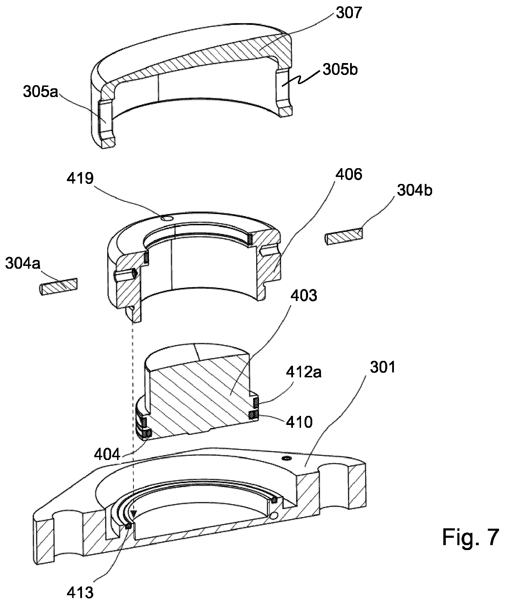

As also illustrated in the exploded view drawing of the end stop 205 in FIG. 6 and the cross-sectional exploded view of FIG. 7, the cavity 401 is defined by an interior volume of a hollow insert 406 that is attached to the base portion 301, for example by way of a screw connection between an outer surface 407 of the insert 406 and an inner wall 408 of a recess 409 in the base portion 301. In an example implementation, the screw fitting may be a M80 thread, i.e. with the recess 409 in the base portion 301 having a diameter of around 80 mm. Other ways of connecting the insert 406 to the base portion 301 may alternatively be used, such as a press-fit connection and/or bolts that secure the insert 406 to the base portion 301. The base portion 301 and the insert 406 collectively form a body 500 of the end stop when assembled. The body 500 comprising a part of the end stop 205 that remains stationary during adjustment.

As shown in FIGs. 4a and 5a, with the piston 403 at its maximum extended position the cavity 401 is at its greatest volume. In a non-limiting example, the maximum height 417 of the cavity 401, i.e. the maximum distance between the first end 404 of the piston 403 and the recess 409 in the base portion 301 may be around 16 mm. In a general aspect, the maximum height of the cavity 401 with the piston 403 in the extended position may be between around 10 and 20 mm. A diameter 418 of the cavity 401 in a non-limiting example may be around 70 mm. In a general aspect, a diameter of the cavity 401 may be between around 50 mm and 100 mm. The first end 404 of the piston 403 has a similar outer diameter to fit within the cylindrical cavity 401. In a particular but non-limiting implementation, the overall height of the end stop 205, including the cap 302 and base portion 301, may vary between a minimum of around 72 mm with the cap 302 fully retracted and a maximum of around 88 mm with the cap 302 fully extended.

As shown in FIG. 4a, the piston 403 may comprise a piston sealing O-ring 410 located in a groove in an outer wall of the piston 403 to provide a fluid seal between the first end of the piston 403 and a side wall 411 of the cavity 401. Guide rings 412a, 412b may be provided between the piston 403 and the insert 406 to align movement of the piston relative to the base body 500, with in this example a first guide ring 412a located in a groove in the piston and a second guide ring 412b located in a groove in the insert 406. The guide rings 412a, 412b may be located in one or both of the piston 403 and insert 406. A pair of guide rings 412a, 412b as illustrated enables smooth alignment of the piston to allow the piston 403 to travel readily between the retracted and extended positions, but a single guide ring or more than two guide rings could be used.

An insert sealing O-ring 413 may be provided to provide a further fluid seal between the insert 406 and the base portion 301, which in the example illustrated in FIG. 4a is located in a groove in the base portion 301 surrounding the recess 409.

As shown in FIG. 6, the insert 406 has an inward flange 414 at an upper end, which defines an upper end of the cavity 401 against which the piston 403 stops when at its fully extended position. The piston 403 has a corresponding reduced diameter portion 415 at an upper end, which slides within the inwards flange 414 of the insert 406. A pair of diametrically opposed apertures 419 may be provided in an upper surface of the insert 406 to receive pins in a suitable tool (e.g., a wrench) used to screw the insert 406 into or out of the base portion 301. However, other arrangements for engagement with a suitable tool can be adopted.

The side wall 306 of the cap 302 fits around an outer surface of the insert 406. A lower end of the side wall 306 locates in a groove 416 in the body 500 defined between an outer annular upstanding flange of the base portion 301, the outer surface of the insert 406 and an outer surface of a further but shorter annular flange on the base which is spaced inwardly from the outer annular flange. An outer surface of the cylindrical groove 416 is defined by the base portion 301. An inner surface of the cylindrical groove 416 is defined by the base portion 301 and by the outer surface of the insert 406. The inner components of the piston 403, insert 406, and associated components are enclosed by the cap 302 and protected from the external environment when in use. The side wall 306 of the cap 302 is partially retained within the cylindrical groove 416 with the piston 403 in the extended position to retain this protection when the piston 403 and cap 302 are in the fully extended position. The cap 302 may be a separate component from the piston 403 and engagement between the side wall 306 of the cap 302 and the base portion 301 and insert 406 (i.e., the body of the end stop) may be such that at least some of the lateral forces applied to the cap 302 in use, say by contact with the sway block 207 as the draft links move, is transferred directly from the cap 302 to the body 500 rather than to the piston. This helps to protect the piston seal 410 and guide rings 412a, 412b and reduce the risk of the piston becoming misaligned in the cavity 401.

FIGs. 6 and 7 illustrate the pins 304a, 304b that, with the end stop 205 assembled, pass through corresponding slots 305a, 305b in the side wall 306 of the cap 302. Inner ends of each of the pins 304a, 304b are secured in holes in the insert 406. The slots 305a, 305b limit travel of the cap 302, the effect of which is that the cap 302 does not need to be secured to the upper end of the piston 403 to prevent it from being removed from the base portion 301. A single retaining pin and corresponding slot may be sufficient to prevent the cap 302 from being removed, although a pair of pins and corresponding slots at diametrically opposed locations around the cap 302 retains the cap 302 more securely.

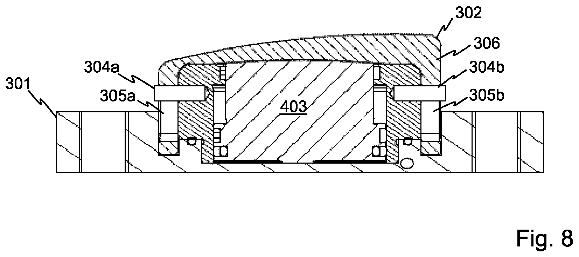

FIG. 8 is a cross-sectional drawing showing the retaining pins 304a, 304b extending through corresponding slots 305a, 305b in the side wall 306 of the cap 302, with the cap 302 and piston 403 in the retracted position. The cap 302 may be extended from the retracted position without movement of the piston 403, but is prevented from being removed from the body 500 by the retaining pins 304a, 304b. In addition to limiting the axial movement of the cap 302, the pins 304a, 304b prevent unintentional rotational movement of the cap relative to the body 500 to maintain the abutment 307 in form of the top face in its intended orientation.

The end stop 205 is adjustable to vary the height of the cap 302 relative to the body 500 by varying the volume of grease contained in the internal cavity 401. To extend the piston 403 and increase the height of the cap 302 relative to the body 500, grease is injected into the internal cavity 401 using a grease gun attached to the grease nipple 303a. The grease nipple 303a typically comprises a one-way valve such that grease pumped into the cavity via the grease nipple 303a does not exit when pressure is applied to the cap 302. To retract the piston 403 and reduce the height of the cap 302 relative to the body. 500, the grease nipple 303a may be loosened or fully removed so that grease can flow out of the port 303. With the grease nipple 303a removed or sufficiently loosened, an operator applies a pressure to the cap 302 to move it closer to the body 500 and retracting the piston 403, with grease escaping through the port 303. The operator can use the draft link 201a, 201b as a lever to apply pressure to the cap 302 to retract the end stop. Once the end stop has been compressed sufficiently, the grease nipple 303a is reinserted and/or fully tightened. Adjustment of the end stop can be finalised by injecting further grease in the event it has been retracted too far. In alternative embodiments, an exit port may be provided in fluid connection with the cavity 401 and/or fluid passageway 402 through which grease is expelled when the end stop is contracted. Such an exit port may have a removable closure that can be taken out or a one-way valve that is opened by an operative to allow grease to flow outwardly but which usually prevents grease escaping. Such an exit port might be provided in place of one of the blanking grommets 420 (FIG. 5b) used to close off the drillings formed during manufacture of the fluid passageway 402.

As illustrated in FIG. 2, the adjustable end stop 205 described herein may be part of a draft link assembly 200 of a three-point hitch for a tractor. The draft link assembly 200 comprises a pair of draft links 201a, 201b with a respective end stop 205 connected to limit sideways movement of each of the draft links 201a, 201b. An end stop 205 may be attached to each draft link 201a, 201b or alternatively may be attached to a central body portion 206 to similarly limit sideways movement of the draft links 201a, 201b.

Use of grease injected though a grease gun to adjust the end stop 205 provides a simple and effective method of adjustment that does not require a complex control system and which is easier to carry out requiring fewer tools than the mechanical adjustment arrangements of the known sway stops. End stops in accordance with the present disclosure may have other applications where the ability to easily adjust the height (depth) of a stop is desirable. Particularly for use in machinery and the like which requires regular greasing such that operators will usually have ready access to a grease gun.

As already mentioned, the cap 302 performs several functions in the end stop 205:

It provides a sacrificial part that can be replaced when worn without requiring replacement of the piston.

Contact between the cap and the body protect the piston from lateral forces applied to the cap so that the piston seals and guides do not have to bear high lateral forces.

The cap forms a protective cover to avoid debris entering the inner parts of the end stop, especially the seals and guide elements.

The upper surface 307 of the and cap is adapted to match the opposing contour of the sway block 207, or other component against which the cap abuts, to provide an ideal contact. For use in other applications requiring a differently profiled abutment surface 307, a different cap design can be used while the other components, the piston, the base and the insert, can remain the same. This reduces manufacturing costs when the end stop is issued for a range of different applications.

All references cited herein are incorporated herein in their entireties. If there is a conflict between definitions herein and in an incorporated reference, the definition herein shall control.

## Claims

1. An adjustable end stop (205) comprising:
a body (500) defining a cavity (401) fluidly connected to a port (303) fitted with a grease nipple (303a); and
a piston (403) having a first end (404) slidably mounted in the cavity (401) and moveable between a retracted position and an extended position;
wherein filling the cavity (401) with a flowable filling material via the grease nipple (303a) causes the piston (403) to move towards the extended position.

2. The adjustable end stop (205) of claim 1, further comprising an abutment (307) movable relative to the body (500) between a first position in which a height of the adjustable end stop (205) is at a minimum and a second position in which a height of the adjustable end stop (205) is at a maximum; and wherein movement of the piston (403) towards its extended position causes the abutment (307) to move towards its second position.

3. The adjustable end stop (205) of claim 2, wherein the abutment (307) is provided on a cap (302) extending about a second end (405) of the piston (403) and slidably mounted to the body (500) for movement between the first and second positions.

4. The adjustable end stop (205) of claim 3, wherein the arrangement is configured such that, in use, lateral forces applied to the cap (302) are transferred directly from the cap (302) to the body (500).

5. The adjustable end stop (205) of claim 3 or claim 4, wherein the arrangement is configured such that an inner surface of the cap (302) is engageable by the second end (405) of the piston (403).

6. The adjustable end stop (205) of any one of the preceding claims, wherein the body (500) comprises a base portion (301) and a hollow insert (406) having a lower end attached to the base portion (301) to define the cavity (401).

7. The adjustable end stop (205) of claim 6, further comprising a fluid passageway (402) connecting the cavity (401) to the port (303) through the base portion (301).

8. The adjustable end stop (205) of claim 7, wherein the hollow insert (406) is attached to the base portion (301) with a screw connection between an outer surface (407) of the insert (406) and an inner wall (408) of a recess (409) in the base portion (301).

9. The adjustable end stop (205) of any one of claims 6 to 8, wherein the insert (406) comprises an inwards flange (414) at an upper end of the insert (406), the piston (403) comprising a corresponding reduced diameter portion (415) at an upper end that is slidable within the inwards flange (414) of the insert (406).

10. The adjustable end stop (205) of any one of claims 6 to 9 when dependent on claim 2, wherein a side wall (306) of the cap (302) comprises a slot (305), the adjustable end stop (205) comprising a retaining pin (304a, 304b) extending from the insert (406) through the slot (305) to limit movement of the cap (302).

11. The adjustable end stop (205) of claim 10, wherein the retaining pin (304a, 304b) is a first retaining pin (304a) and the slot (305) is a first slot (305a), the side wall (306) of the cap (302) comprising a second slot (305b), the end stop (205) comprising a second retaining pin (304b) extending from the insert (406) through the second slot (305b).

12. The adjustable end stop (205) of any one of the preceding claims, comprising a guide ring (412a, 412b) between the piston (403) and a side wall (411) of the cavity (401).

13. The adjustable stop (205) of any one of the preceding claims, wherein the port (303) is a filling port and the body comprises an exit port fluidly connected to the cavity (401), the exit port having:
a closure that is removable to allow flowable material to be removed from the cavity (401); or
a one-way valve that is selectively openable to allow flowable material to be removed from the cavity (401).

14. A draft link assembly (200) for a three-point hitch, the draft link assembly (200) comprising a pair of draft links (201a, 201b) and a pair of adjustable end stops (205) of any one of the preceding claims, each adjustable end stop (205) being arranged to limit sideways movement of a respective one of the draft links (201a, 201b).

15. A method of adjusting the height of the adjustable end stop (205) of any one of the preceding claims, the method comprising introducing a flowable material into the cavity (401) using a grease gun connected to the grease nipple (303a) of the port (303) to cause the piston (403) to move towards the extended position, increasing the height of the adjustable end stop (205).
